## Europäisches Patentamt
## European Patent Office
## Office européen des brevets

(11) Numéro de publication: **0 187 074**
**B1**

(12) # FASCICULE DE BREVET EUROPÉEN

(45) Date de publication du fascicule du brevet:
**12.07.89**

(51) Int. Cl.⁴: **E 21 B  43/25,** C 12 P  19/06,
C 08 L  5/00

(21) Numéro de dépôt: **85402354.6**

(22) Date de dépôt: **29.11.85**

(54) **Procédé de stabilisation thermique de solutions aqueuses de polysaccharides.**

(30) Priorité: **05.12.84  FR 8418506**

(43) Date de publication de la demande:
**09.07.86 Bulletin 86/28**

(45) Mention de la délivrance du brevet:
**12.07.89 Bulletin 89/28**

(84) Etats contractants désignés:
**AT DE FR GB**

(56) Documents cité:
**EP-A-0 106 665**
**EP-A-0 106 666**
**US-A-4 352 679**
**US-A-4 425 246**

**CHEMICAL ABSTRACTS, vol. 95, no. 15, 12 octobre 1981, page 508, résumé no. 130894s, Columbus, Ohio, US; T. MOJONNIER: "Deoxygenation of water without vacuum"**

(73) Titulaire: **RHONE- POULENC CHIMIE, 25, quai Paul Doumer, F-92408 Courbevoie Cédex (FR)**

(72) Inventeur: **Linossier, Jean- Louis, 17B, rue Ernest Sabregue, F-69009 Lyon (FR)**

(74) Mandataire: **Tavernier, Colette, RHONE- POULENC INTERSERVICES Service Brevets Chimie 25, Quai Paul Doumer, F-92408 Courbevoie Cédex (FR)**

**Description**

La présente invention concerne un procédé pour stabiliser la viscosité des solutions de biopolymères polysaccharidiques à température élevée.

Les hétéropolysaccharides ou biopolymères obtenus par fermentation d'un hydrate de carbone sous l'action de bactéries du genre Xanthomonas ou Arthrobacter ou Alcagines, ou de champignons appartenant au genre Sclerotium ont trouvé de nombreuses applications industrielles en raison de leurs propriétés épaississantes et viscosifiantes. Les polysaccharides tels que la gomme xanthane sont utilisés notamment dans l'exploitation des gisements de pétrole, dans les fluides de contrôle de mobilité en récupération assistée ainsi que dans les fluides de forage, de reconditionnement de puits, de complétion. La gomme xanthane se caractérise en effet par une haute viscosité à basse concentration, une grande insensibilité à la salinité et à la nature des sels et une grande stabilité aux contraintes mécaniques. Toutefois, l'emploi des polysaccharides est limité d'une part, par la difficulté à préparer des solutions qui ne colmatent pas les roches et d'autre part, par leur instabilité thermique. Pour la récupération assistée du pétrole, la viscosité des solutions de polymères doit rester stable pendant une durée prolongée aux températures rencontrées dans les réservoirs qui peuvent être supérieures à 60°C. La perte de viscosité à long terme et à température élevée est généralement attribuée à une dégradation de la molécule avec hydrolyse des fonctions acétate, pyruvate, glucuronate, libération des acides correspondants et coupure des liaisons glycosidiques. Le mécanisme de dégradation est complexe et dépend de facteurs tels que la température, la teneur en oxygène dissous, le pH, la salinité.

Des solutions ont déjà été suggérées pour résoudre ce problème. Dans le brevet GB-1 518 628 la stabilité de la viscosité est améliorée par traitement du liquide aqueux à l'aide d'un désoxygénant suivi de l'addition d'un antioxydant contenant du soufre et d'un alcool oxydable soluble dans l'eau. Le liquide aqueux est préférablement une eau douce et peu saline.

Dans le brevet US-4 425 246 des solutions d'hétéropolysaccharides contenant au moins 0,5 % en poids de sels minéraux sont stabilisées par désoxygénation à l'aide d'un gaz inerte et/ou d'un agent désoxygénant incluant les sulfites, bisulfites, dithionites hydroxylamine ou hydrazine, puis traitées thermiquement et filtrées.

Dans les demandes de brevet européen N° 0 106 665 et N° 0 106 666 les solutions salines de polysaccharide substantiellement libres d'oxygène dissous sont traitées à pH au moins égal à 5 par un borohydrure de métal alcalin ou par un dithionite, respectivement.

Ces procédés permettent de stabiliser la viscosité des polysaccharides de manière relativement efficace mais ils ont pour inconvénient d'être souvent incompatibles avec la salinité des eaux de gisement. L'addition de l'agent désoxygénant peut conduire avec les ions en solution à la formation de sels ou hydroxydes insolubles, difficilement filtrables et qui colmateront les pores de la roche dans laquelle la solution est injectée.

La présente invention a pour but de fournir un moyen simple et rapide pour stabiliser les solutions salines de polysaccharides contre la chute de viscosité à température élevée pendant des périodes de temps prolongées sans amoindrir notablement leurs propriétés de filtrabilité.

L'invention a encore pour objet de fournir des solutions de polysaccharides utilisables comme fluide de déplacement dans un procédé de récupération secondaire et tertiaire du pétrole à partir de formations souterraines soumises à des températures élevées, pouvant aller jusqu'à au moins 150°.

Le procédé de stabilisation selon l'invention est caractérisé en ce qu'il comprend:

a) la préparation d'une solution aqueuse saline d'un hétéropolysaccharide ayant une force ionique suffisante pour développer la forme ordonnée du polysaccharide.

b) l'élimination de l'oxygène dissous par dégazage au moyen de gaz carbonique

c) l'addition d'au moins un agent réducteur-désoxygénant en quantité efficace pour maintenir le pH de la solution à une valeur comprise entre 5 et 7.

Les hétéropolysaccharides ou biopolymères utilisés dans le procédé peuvent être tout polysaccharide ayant des propriétés hydrophiles, pseudoplastiques et viscosifiantes, qui sont produits par fermentation d'un hydrate de carbone sous l'action de microorganismes. Comme microorganismes susceptibles de produire des gommes hydropbiles, on peut citer, en particulier, les bactéries appartenant au genre Xanthomonas, au genre Arthrobacter, au genre Azotobacter, au genre Agrobacterium, au genre Erwinia, au genre Alcaligenes, ou les champignons appartenant au genre Sclerotium.

On préfère la gomme xanthane biopolymère produit par les bactéries du genre Xanthomonas, et plus spécialement le biopolymère dérivé de l'espèce Xanthomonas Campestris. Sa masse moléculaire est supérieure à $10^6$. Elle contient à l'état natif des unités D-glucose, D-mannose, D-glucuronate, des radicaux O-acétyle et des radicaux pyruvate. La préparation de la gomme xanthane est décrite dans de nombreuses publications et de nombreux brevets par exemple les brevets US-A-3 020 206, US-A-3 391 060, US-A-4 154 654.

Pour préparer la solution aqueuse saline, le polysaccharide peut être utilisé sous forme d'un moût brut ou de poudre de qualité commerciale. A l'issue du processus de fermentation et production du polysaccharide, le moût contient normalement environ 15 à 50 g/litre de biopolymère et son pH est compris entre environ 6,5 et 7,5. On peut bien entendu utiliser des moûts qui ont été concentrés et/ou clarifiés par toute méthode connue telle que ultrafiltration, traitement thermique, traitement enzymatique, filtration sur terres diatomées etc... La concentration de la solution en polysaccharide n'est pas critique et peut être comprise entre 0,005 et 30 % en poids. Les solutions utilisées comme fluide de déplacement contiennent généralement 0,02 à 3 % de polymère.

La poudre ou le moût entier si nécessaire est dilué avec l'eau de manière à obtenir la viscosité convenable pour l'application choisie, la concentration en sels de la solution aqueuse devant être suffisante pour développer la forme ordonnée des macromolécules. La transition de la forme désordonnée à la forme ordonnée dépend de nombreux paramètres et notamment de la température et de la force ionique, mais elle reste indépendante de la concentration en polymère dans la mesure où l'on tient compte de la concentration ionique. Le passage de la forme désordonnée à la forme ordonnée peut être controlé préliminairement par des méthodes spectroscopiques (pouvoir rotatoire, R.M.N....) viscosimétriques et pH métriques).

Les sels présents en solution peuvent contenir du sodium, potassium, calcium, magnésium, barium, strontium, fer sous forme de chlorures, iodures, sulfates, carbonates, bicarbonates, phosphates. De manière pratique, en récupération assistée du pétrole, on utilise souvent pour la dilution, les eaux de gisement ou des eaux dont la salinité en est proche, par exemple, des eaux de nappe aquifère.

La solution saline est purgée au moyen de gaz carbonique par toute technique connue, par exemple par bullage. La quantité de $CO_2$ doit être suffisante pour maintenir une teneur minimale en oxygène dans la solution. La présence du $CO_2$ participe à l'équilibre calcocarbonique de la solution. Le polysaccharide peut être dissous avant, pendant ou après le traitement par le gaz carbonique.

Les agents réducteurs-désoxygénants sont bien connus dans l'art. On peut citer par exemple, les sulfites, bisulfites, hydrosulfites, borohydrures, l'hydrazine, les acides méthylolsulfoniques comme le formaldéhyde bisulfite de sodium, les formaldéhydes sulfoxylates comme le formaldéhyde sulfoxylate de sodium ou de zinc. Ces agents réducteurs peuvent être utilisés seuls ou en mélange entre eux. On préfère tout particulièrement l'hydrazine pour éviter toute précipitation de sels insolubles. L'emploi des autres agents désoxygénants peut conduire dans certains cas à la formation de sels insolubles tels que le sulfite de calcium hemihydrate susceptibles d'affecter la filtrabilité de la solution.

L'hydrazine peut être mise en oeuvre sous forme anhydre ou hydratée, sous forme de sels tels que par exemple les chlorures, le sulfate, ou sous forme de carbohydrazide.

La quantité utile en agent réducteur doit être suffisante pour maintenir le pH de la solution à une valeur comprise entre 5 et 7 pendant une durée prolongée. On a trouvé que des quantités comprises entre 100 et 1.500 ppm sont généralement convenables. Des valeurs inférieures à 100 ppm ne permettent pas de maintenir le pH dans l'intervalle critique. La limite supérieure n'est pas critique mais des valeurs supérieures à 1.500 ppm ne sont pas souhaitables économiquement.

D'autres composés peuvent éventuellement être incorporés dans les solutions, par exemple des agents de transfert de radicaux libres comme les alcools inférieurs, les thiourées, l'hydroquinone, des biocides en particulier le formaldehyde, des agents chelatants, des agents tensioactifs et autres.

Les solutions traitées selon le procédé de l'invention sont utiles notamment dans les opérations de forage et dans l'exploitation des gisements de pétrole et plus spécialement pour la récupération secondaire et tertiaire à partir de réservoirs dont la température est relativement élevée. L'invention concerne donc également un procédé pour la récupération secondaire et tertiaire du pétrole comprenant l'injection dans la formation d'une solution saline d'hétéropolysaccharide qui a été désoxygénée au moyen de gaz carbonique et additionnée d'au moins un agent réducteur-désoxygénant en quantité efficace pour maintenir le pH de la solution à une valeur comprise entre 5 et 7 pendant une durée prolongée.

L'action combinée du gaz carbonique et du réducteur permet en stabilisant le pH de maintenir à long terme une bonne conservation de la viscosité de la solution. Cette combinaison a encore pour avantage d'être compatible avec les eaux de gisement ou aquifère de toute nature et de prévenir toute précipitation de matières insolubles qui entraineraient un colmatage progressif des pores de la roche. Ce résultat ne peut être atteint par traitement à l'aide de l'agent réducteur utilisé seul, ou conjointement avec un gaz inerte selon l'art antérieur.

Les exemples suivants, donnés à titre non limitatif, illustrent l'invention.

## Exemple 1

On prépare une solution aqueuse contenant 1.000 ppm de biopolymère Xanthane (RHODOFLOOD XR 75 commercialisé par la Société Rhône-Poulenc Pétrole Services) en utilisant pour la dilution une eau saline renfermant 100 g/l de Na Cl, 10 g/l de $CaCl_2$ et 10 g/l de $Mg\ Cl_2$.

Une partie aliquote de la solution est soumise à un barbottage de $CO_2$ exempt d'oxygène pendant 4 heures.

On ajoute à la solution 1.000 ppm d'hydrazine sous forme d'hydrate d'hydrazine.

La solution est transférée par le vide dans des ampoules en verre borosilicaté qui sont scellées à la flamme de manière à laisser un espace gazeux au-dessus du liquide.

Les ampoules sont stockées à 80°C à l'intérieur d'une enceinte thermostatée. On mesure périodiquement la viscosité et le pH de la solution après ouverture des ampoules aux échéances prévues.

Les résultats figurent dans le Tableau 1.

**Exemple 2**

On procède de la même manière que dans l'exemple 1 en ajoutant en plus à la solution 500 ppm de formol. Les résultats de viscosité et pH figurent dans le Tableau 1.

Sur la solution initiale et sur la solution vieillie six mois à 80°C, on effectue un test de filtrabilité sous une pression constante de 3 bars en utilisant des filtres Millipore de surface filtrante 13 mm et de porosité 0,8 μm et 1,2 μm.

Porosité 1,2 μm
Solution initiale: 58 ml sont filtrés en 1'20"
Solution vieillie: 58 ml sont filtrés en 3'35"
Porosité 0,8 μm
Solution initiale: 50 ml sont filtrés en 10'
Solution vieillie: 38 ml sont filtrés en 10'

**Exemple 3**

On procède comme dans l'exemple 1 mais la solution saline est une eau de mer synthétique contenant 24 g/l de Na Cl - 1,3 g/l de Ca $Cl_2$ - 5 g/l de Mg $Cl_2$ - 4,3 g/l de $Na_2$ $SO_4$ et 0,2 g/l de $NaHCO_3$.

Comme dans l'exemple 1, la solution contenant 1.000 ppm de Xanthane est traitée par $CO_2$ et additionnée de 1.000 ppm d'hydrazine.

Les résultats figurent dans le Tableau 1.

**Exemple 4**

On opère comme dans l'exemple 1 en remplaçant l'hydrazine par 1.000 ppm de sulfite de soude et 500 ppm de formol.

Une partie du sulfite précipite sous forme de sulfite de calcium hémihydrate. Ce précipité disparait au cours des premières heures de vieillissement.

Les résultats figurent dans le Tableau 1.

**Exemple 5**

On renouvelle l'exemple 1 en ajoutant dans la solution aqueuse en même temps que l'hydrazine 1.000 ppm d'isobutanol et 500 ppm de thiourée.

On obtient des résultats équivalents à ceux de l'exemple 1 (Tableau I).

**Exemple 6**

On renouvelle l'exemple 1 en ajoutant à la solution contenant l'hydrazine 100 ppm de dithionite de sodium. Les résultats sont équivalents à ceux de l'exemple 1 (Tableau I).

**Exemples 7 à 13** (exemples comparatifs)

Dans une série d'essais comparatifs, on prépare des ampoules de la manière décrite dans l'exemple 1 en utilisant la même solution initiale (sauf pour l'exemple 13) et en faisant varier les paramètres du traitement. Les résultats figurent dans le Tableau II. Sauf indication contraire, les quantités d'additif sont identiques à celles de l'exemple 1.

On peut voir que:

- si la solution saline de polysaccharide est dégazée à l'aide de $CO_2$ ou d'hélium, sans addition d'agent réducteur, le pH chute très rapidement et la viscosité ne se stabilise pas (exemples 8 et 9).
- si la solution n'est pas dégazée avant addition de l'hydrazine (exemple 10), la chute de viscosité est rapide, et si le dégazage est effectué au moyen d'hélium (exemple 11), la viscosité continue à baisser au-delà de deux mois à la température de 80°C. En outre, dans ces deux essais, la valeur élevée du pH conduit à une formation

4

importante de précipités insolubles susceptibles de réduire la perméabilité d'un gisement.

- la formation du précipité est immédiate et persistante si, après dégazage par l'hélium, on remplace l'hydrazine par la même quantité de sulfite de sodium (exemple 12).

- la nécessité d'utiliser une solution saline est illustrée par l'exemple 13. Dans cet essai, on a utilisé pour la dilution une eau distillée.

**Tableau I**

| Ex | Traitement | Viscosité* (mPa.s) et pH après stockage à 80°C pendant | | | | | | | | | | | |
|---|---|---|---|---|---|---|---|---|---|---|---|---|---|
| | | 0 | | 2 jours | | 15 jours | | 1 mois | | 2 mois | | 6 mois | |
| 1 | $CO_2 + N_2H_4$ | 51,5 | 5,8 | 38,5 | 5,9 | 32 | 5,9 | 31,5 | 6,0 | 30 | 5,9 | 30 | 6,0 |
| 2 | $CO_2 + N_2H_4 + HCHO$ | 51 | 5,6 | 46,5 | 5,9 | 32 | 6,0 | 30 | 6,1 | 29,5 | 6,1 | 29,5 | 6,2 |
| 3 | $CO_2 + N_2H_4$ ** | 45 | 6,1 | 27 | 6,2 | 24,5 | 6,1 | 23 | 6,3 | 23 | 6,2 | | |
| 4 | $CO_2 + Na_2SO_3 + HCHO$ | 52,5 | 5,3 | 49 | 5,5 | 31 | 5,2 | 31,5 | 5,3 | 29 | 5,3 | 27,5 | 5,4 |
| 5 | $CO_2 + N_2H_4$ + isbutanol + $S = C(NH_2)_2$ | 50 | 5,7 | 35 | 6,1 | 31,5 | 6,2 | 30,5 | 6,2 | 30 | 6,1 | 29,5 | 6,2 |
| 6 | $CO_2 + N_2H_4$ + $Na_2 S_2O_4$ | 53 | 6,0 | 36,5 | 6,0 | 30 | 6,0 | 30 | 6,1 | | | | |

* Brookfield modèle LVT - adaptateur UL. 30°C - 7,3 s$^{-1}$
** Salinité différente

**Tableau II** Exemples comparatifs

| Ex | Traitement | Viscosité* (mPa.s) et pH après stockage à 80°C pendant | | | | | | | | | | | |
|---|---|---|---|---|---|---|---|---|---|---|---|---|---|
| | | 0 | | 2 jours | | 15 jours | | 1 mois | | 2 mois | | 6 mois | |
| 7 | Aucun | 53 | 7 | 27,5 | 6 | 11 | 4,2 | 3,5 | 4,0 | | | | |
| 8 | $CO_2$ seul | 51 | | 42 | 4,1 | 22,5 | 4,0 | 16 | 4,0 | 14,5 | 3,6 | 7,5 | 3,9 |
| 9 | He seul | 51,5 | 6,8 | 44,5 | 4,8 | 33 | 5,2 | 17 | 4,1 | 10 | 3,8 | 4 | 4,1 |
| 10 | $N_2H_4$ seul | 46 | 9,8 | 21,5 | 9,5 | 19,5 | 9,2 | 15,5 | 9,2 | 19,5 | 9,1 | 15 | 9,1 |
| 11 | $He + N_2H_4 + HCHO$ | 53,5 | 9,1 | 36,5 | 8,8 | 32,5 | 8,6 | 31,5 | 8,0 | 29,5 | 8,9 | 23 | 8,9 |
| 12 | $He + Na_2SO_3 + HCHO$ | 44 | 9,5 | 31,5 | 7,5 | 29,3 | 6,7 | 27,5 | 6,7 | 28 | 6,5 | 26 | 6,2 |
| 13 ** | $CO_2 + N_2H_4$ | 39,5 | 6,4 | 10,5 | 6,5 | 5,5 | 6,5 | 5 | 6,4 | | | | |

* Brookfield modèle LVT - adaptateur UL. 30°C - 7,3 s$^{-1}$
** Salinité nulle

**Revendications**

1. Procédé de stabilisation de la viscosité de solutions salines de polysaccharides soumises à une température élevée pendant une période de temps prolongée caractérisé en ce qu'il comprend:

a) la préparation d'une solution aqueuse saline d'un hétéropolysaccharide ayant une force ionique suffisante pour développer la forme ordonnée du polysaccharide.

b) l'élimination de l'oxygène dissous par dégazage au moyen de gaz carbonique

c) l'addition d'un agent réducteur-désoxygénant en quantité efficace pour maintenir le pH de la solution à une valeur comprise entre 5 et 7.

2. Procédé selon la revendication 1, caractérisé en ce que le polysaccharide est la gomme Xanthane.

3. Procédé selon les revendications 1 ou 2, caractérisé en ce que la solution aqueuse est un moût de fermentation.

4. Procédé selon l'une des revendications 1 à 3, caractérisé en ce que l'agent réducteur est choisi dans le groupe formé par l'hydrazine, les sulfites, bisulfites, hydrosulfites et borohydrures.

5. Procédé selon la revendication 4, caractérisé en ce que l'hydrazine est mise en oeuvre sous forme anhydre ou hydratée ou sous forme de chlorures, de sulfates ou de carbohydrazide.

6. Procédé selon l'une des revendications 1 à 5, caractérisé en ce que la quantité d'agent réducteur est comprise entre 100 ppm et 1.500 ppm.

7. Procédé selon l'une des revendications 1 à 6 caractérisé en ce que la solution comprend en outre un biocide.

8. Procédé selon la revendication 7 caractérisé en ce que le biocide est le formaldéhyde.

9. Procédé de récupération secondaire et tertiaire du pétrole comprenant l'injection dans une formation souterraine d'une solution aqueuse saline d'hétéropolysaccharide, caractérisé en ce qu'on utilise une solution selon l'une des revendications 1 à 8 qui a été désoxygénée par dégazage à l'aide de gaz carbonique et additionnée d'un agent réducteur-désoxygénant en quantité efficace pour maintenir le pH à une valeur comprise entre 5 et 7 pendant une durée prolongée à la température de la formation souterraine.

10. Procédé selon la revendication 9 caractérisé en ce que la concentration en polysaccharide est comprise entre 0,02 et 3 % en poids.

## Patentansprüche

1. Verfahren zur Stabilisierung der Viskosität von Polysaccharid-Salzlösungen, die über einen längeren Zeitraum einer erhöhten Temperatur ausgesetzt werden,
dadurch gekennzeichnet, daß es umfaßt:
a) die Herstellung einer wäßrigen Salzlösung eines Heteropolysaccharids mit einer Ionenstärke, die ausreicht, die geordnete Form des Polysaccharids zu entwickeln,
b) Entfernung von gelöstem Sauerstoff durch Entgasen mit Hilfe von Kohlendioxid,
c) Zugabe eines Mittels zur Reduktion und Sauerstoffentfernung in einer Menge, die ausreicht, um den pH-Wert der Lösung auf einem Wert zwischen 5 und 7 zu halten.

2. Verfahren nach Anspruch 1,
dadurch gekennzeichnet, daß das Polysaccharid Xanthangummi ist.

3. Verfahren nach Anspruch 1 oder 2,
dadurch gekennzeichnet, daß die wäßrige Lösung eine Fermentationsbrühe ist.

4. Verfahren nach einem der Ansprüche 1 bis 3,
dadurch gekennzeichnet, daß das Reduktionsmittel ausgewählt wird aus der Gruppe, die gebildet wird durch Hydrazin, die Sulfite, Bisulfite, Hydrosulfite und Borhydride.

5. Verfahren nach Anspruch 4,
dadurch gekennzeichnet, daß das Hydrazin in wasserfreier oder hydratisierter Form oder in Form des Chlorids, Sulfats oder Carbohydrazids eingesetzt wird.

6. Verfahren nach einem der Ansprüche 1 bis 5,
dadurch gekennzeichnet, daß die Menge an Reduktionsmittel zwischen 100 und 1500 ppm liegt.

7. Verfahren nach einem der Ansprüche 1 bis 6,
dadurch gekennzeichnet, daß die Lösung unter anderem ein Biocid enthält.

8. Verfahren nach Anspruch 7,
dadurch gekennzeichnet, daß das Biocid Formaldehyd ist.

9. Verfahren zur sekundären und tertiären Erdölgewinnung, umfassend die Injektion einer wäßrigen Salzlösung von Heteropolysaccharid in eine Erdformation,
dadurch gekennzeichnet, daß man eine Lösung nach einem der Ansprüche 1 bis 8 verwendet, die durch Entgasen mit Hilfe von Kohlendioxid von Sauerstoff befreit ist und zu der ein Reduktions- und Sauerstoffentfernendes Mittel in einer ausreichenden Menge zugesetzt worden ist, um den pH-Wert über einen längeren Zeitraum bei der Temperatur der Bodenformation auf einem Wert zwischen 5 und 7 zu halten.

10. Verfahren nach Anspruch 9,
dadurch gekennzeichnet, daß die Konzentration des Polysaccharids zwischen 0,02 und 3 Gew.-% liegt.

## Claims

1. Process for stabilising the viscosity of saline solutions of polysaccharides subjected to a high temperature for an extended period of time, characterised in that it comprises:
a) the preparation of a saline aqueous solution of a heteropolysaccharide having sufficient ionic strength to give rise to the ordered form of the polysaccharide,
b) the removal of the dissolved oxygen by outgassing using carbon dioxide, and
c) the addition of at least one reducing agent/oxygen scavenger in an amount which is effective for maintaining the pH of the solution at a value between 5 and 7.

2. Process according to Claim 1, characterised in that the polysaccharide is xanthan gum.

3. Process according to Claim 1 or 2, characterised in that the aqueous solution is a fermentation must.

4. Process according to one of Claims 1 to 3, characterised in that the reducing agent is chosen from the group consisting of hydrazine, sulphites, bisulphites, hydrosulphites and borohydrides.

5. Process according to Claim 4, characterised in that hydrazine is used in anhydrous or hydrated form or in the form of chlorides or sulphates or of carbohydrazide.

6. Process according to one of Claims 1 to 5, characterised in that the amount of reducing agent is between 100 ppm and 1500 ppm.

7. Process according to one of Claims 1 to 6, characterised in that the solution also contains a biocide.

8. Process according to Claim 7, characterised in that the biocide is formaldehyde.

9. Process for secondary and tertiary recovery of oil comprising the injection of a saline aqueous solution of heteropolysaccharide into an underground formation, characterised in that there is used a solution according to one of Claims 1 to 8 which has been deoxygenated by outgassing using carbon dioxide and to which a reducing agent/oxygen scavenger has been added in an amount which is effective for maintaining the pH at a value between 5 and 7 for an extended period at the temperature of the underground formation.

10. Process according to Claim 9, characterised in that the concentration of polysaccharide is between 0.02 and 3 % by weight.